# EUROPÄISCHE PATENTSCHRIFT

(11) **EP 3 181 288 B1**
(45) Veröffentlichungstag und Bekanntmachung des Hinweises auf die Patenterteilung: **18.07.2018**
(21) Anmeldenummer: 15200177.2
(22) Anmeldetag: 15.12.2015
(51) Int. Cl.: B23Q 1/01, B23Q 7/04

(54) **WERKZEUGMASCHINE MIT HÄNGENDEM GREIFROBOTER**
MACHINE TOOL WITH SUSPENDED GRABBING ROBOT
MACHINE-OUTIL COMPRENANT UN ROBOT DE PRÉHENSION SUSPENDU

(43) Veröffentlichungstag der Anmeldung: 21.06.2017
(73) Patentinhaber: Schwäbische Werkzeugmaschinen GmbH, 78713 Schramberg-Waldmössingen (DE)
(72) Erfinder: Armleder, Wolfgang, 78628 Rottweil (DE); Eger, Martin, 78737 Fluorn-Winzeln (DE)
(74) Vertreter: Kohler Schmid Möbus Patentanwälte

(56) Entgegenhaltungen:
- DE-A1- 19 857 012
- DE-A1-102014 007 832
- US-B1- 8 066 548

## Beschreibung

Die Erfindung betrifft eine Werkzeugmaschine zur insbesondere spanenden Bearbeitung von Werkstücken, aufweisend zwei einander gegenüberliegende Seitenwände, die unten durch einen Bodenträger und oben durch einen Deckenträger miteinander verbunden sind, einen in den zwei einander gegenüberliegenden Seitenwänden drehbar gelagerten Werkstücktisch für zu bearbeitende Werkstücke, und eine an den zwei einander gegenüberliegenden Seitenwänden gehaltene Bearbeitungseinheit mit einer insbesondere horizontalen Werkzeugspindel.

Eine derartige Werkzeugmaschine ist beispielsweise durch die DE 198 57 012 A1 bekannt geworden.

Üblicherweise werden bei Werkzeugmaschinen mit einem drehbar gelagerten Werkstücktisch Werkstücke von außen über einen Bestückungsroboter be- und entladen, der entweder auf dem Maschinenbett steht oder frontseitig an eine Maschinenseite angeflanscht ist. Für einen solchen Bestückungsroboter stellen im Maschineninnenraum befindliche Maschinenkomponenten, wie z.B. ausziehbare Schubladen eines Werkstückspeichers, Hindernisse dar, um die der Bestückungsroboter herumschwenken muss.

Es ist demgegenüber die Aufgabe der Erfindung, bei einer Werkzeugmaschine der eingangs genannten Art den Platzbedarf zu verringern und den Integrationsgrad der Maschinenkomponenten zu erhöhen.

Diese Aufgabe wird bei einer Werkzeugmaschine der eingangs genannten Art erfindungsgemäß durch einen am Deckenträger hängend montierten Greifroboter zum Beladen des Werkstücktischs mit zu bearbeitenden Werkstücken und zum Entladen des Werkstücktischs von bearbeiteten Werkstücken gelöst.

Erfindungsgemäß ist der Greifroboter mit dem selbsttragenden verwindungssteifen kabinenartigen Maschinengestell verbunden und in einen "praktischen" Monoblockwürfel integriert, der alle Maschinenkomponenten in sich aufnimmt. Der Greifroboter hängt vom Deckenträger herab, so dass seine Bewegungen durch andere Maschinenkomponenten nicht oder nur wenig behindert werden. Die Erfindung stellt somit eine sich selbst be- und entladende Werkzeugmaschine dar.

Vorzugsweise ist die Bearbeitungseinheit in vertikalen Führungen, welche jeweils an den Stirnseiten der zwei einander gegenüberliegenden Seitenwänden angeordnet sind, geführt.

Vorteilhaft sind die Bearbeitungseinheit und der Greifroboter auf einander gegenüberliegenden Seiten des Werkstücktischs angeordnet, wodurch der Innenraum der Werkzeugmaschine in einen Bearbeitungsraum mit der Bearbeitungseinheit und in einen Bestückungsraum mit dem Greifroboter aufgeteilt ist.

Bei einer bevorzugten Ausführungsform der Erfindung ist ein Werkstückspeicher auf der der Bearbeitungseinheit gegenüberliegenden Maschinenseite angeordnet, wobei der Greifroboter zum Beladen des Werkstücktischs mit zu bearbeitenden Werkstücken aus dem Werkstückspeicher und zum Entladen des Werkstücktischs von bearbeiteten Werkstücken in den Werkstückspeicher dient.

Bei einer weiteren bevorzugten Ausführungsform der Erfindung ist am Deckenträger ein Werkzeugmagazin gehalten, wobei der Greifroboter dann auch zum Wechseln von Werkzeugen zwischen dem Werkzeugmagazin und der Bearbeitungseinheit dient.

Unterhalb des Greifroboters kann noch mindestens eine weitere Bearbeitungsstation zur Bearbeitung von Werkstücken, wie z.B. eine Entgratungs- oder Reinigungseinrichtung, angeordnet sein, wobei der Greifroboter dann auch zum Be- und Entladen der weiteren Bearbeitungsstation mit Werkstücken dient.

Vorzugsweise weist mindestens eine der zwei einander gegenüberliegenden Seitenwände, insbesondere jede der zwei einander gegenüberliegenden Seitenwände, entweder eine einzige Wandöffnung als gemeinsame Zugangsöffnung zur Bearbeitungseinheit und zum Greifroboter oder zwei separate Wandöffnungen als Zugangsöffnungen zur Bearbeitungseinheit und zum Greifroboter auf. Alternativ kann aber auch mindestens eine der zwei einander gegenüberliegenden Seitenwände, insbesondere eine hintere der zwei einander gegenüberliegenden Seitenwände, als geschlossene Wand ohne Zugangsöffnung ausgebildet sein.

Bei einer bevorzugten Ausführung der Erfindung sind die zwei einander gegenüberliegenden Seitenwände jeweils einteilig ausgebildet und bilden zusammen mit dem Bodenträger und dem Deckenträger ein gemeinsames Monoblock-Rahmengestell.

Bei einer anderen bevorzugten Ausführung der Erfindung sind die zwei einander gegenüberliegenden Seitenwände jeweils mehrteilig, insbesondere zweiteilig ausgebildet. In dem Fall, in dem die zwei einander gegenüberliegenden Seitenwände jeweils einen ersten und einen zweiten Wandabschnitt aufweisen, bilden die ersten Wandabschnitte der zwei Seitenwände ein erstes Monoblock-Rahmengestell und die zweiten Wandabschnitte der zwei Seitenwände ein zweites Monoblock-Rahmengestell, die beide miteinander zu einem gemeinsamen Monoblock-Rahmengestell verbunden sind.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung. Die Erfindung ist in den Figuren schematisch dargestellt, so dass die wesentlichen Merkmale der Erfindung gut zu erkennen ist. Die Darstellungen sind nicht notwendigerweise maßstäblich zu verstehen.

Es zeigt:
- Fig. 1: eine Vorderansicht einer erfindungsgemäßen Werkzeugmaschine mit einteiligen Seitenwänden;
- Fig. 2: eine perspektivische Ansicht des Monoblock-Rahmengestells der Werkzeugmaschine von Fig. 1;
- Fign. 3a, 3b: die in Fig. 1 rechte Maschinenseite (Fig. 3a) und die in Fig. 1 linke Maschinenseite (Fig. 3b) der Werkzeugmaschine;
- Fign. 4a-4c: alternative Ausgestaltungen der in Fig. 2 gezeigten vorderen und hinteren Seitenwände der Werkzeugmaschine;
- Fig. 5: eine Vorderansicht einer erfindungsgemäßen Werkzeugmaschine mit zweiteiligen Seitenwänden;
- Fig. 6: eine perspektivische Ansicht des Monoblock-Rahmengestells der Werkzeugmaschine von Fig. 5; und
- Fign. 7a-7c: alternative Ausgestaltungen der in Fig. 6 gezeigten vorderen Seitenwände der Werkzeugmaschine.

In der folgenden Figurenbeschreibung werden für gleiche bzw. funktionsgleiche Bauteile identische Bezugszeichen verwendet.

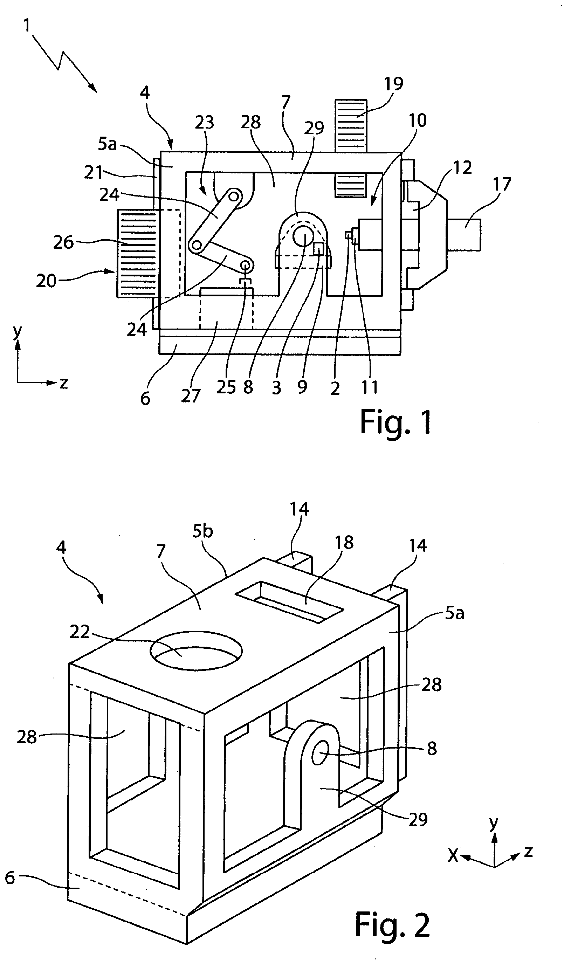

**Fig. 1** zeigt eine horizontale Werkzeugmaschine **1** zur spanenden Bearbeitung von Werkstücken in so genannter Monoblock-Bauweise, bei der die zwischen Werkzeug **2** und Werkstück **3** wirkenden Kräfte von einem gemeinsamen Rahmengestell **4** mit ausreichender Gesamtsteifigkeit aufgenommen werden.

Wie in **Fig. 2** gezeigt, ist das Rahmengestell 4 durch zwei einander gegenüberliegende, einteilige Seitenwände **5a**, **5b** gebildet, die unten durch einen Bodenträger **6** und oben durch einen Deckenträger 7 miteinander verbunden sind. Über jeweils eine Lageröffnung **8** in den beiden Seitenwänden 5a, 5b ist ein Werkstücktisch **9** für zu bearbeitende Werkstücke 3 innerhalb des Rahmengestells 4 drehbar um eine zur X-Achse parallele Drehachse gelagert. Eine Bearbeitungseinheit **10** mit einer das Werkzeug 2 tragenden horizontalen Werkzeugspindel **11** ist mittels einer XYZ-Schlitteneinheit **12** an den einen, in Fig. 1 rechten Stirnseiten der Seitenwände 5a, 5b befestigt.

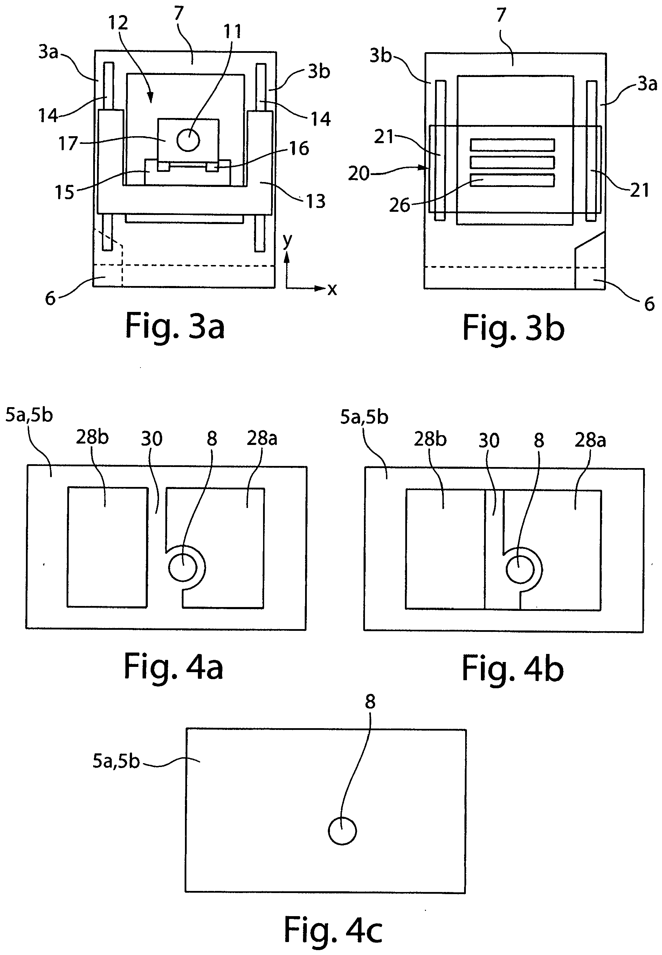

Wie in **Fig. 3a** gezeigt, weist die XYZ-Schlitteneinheit 12 einen Y-Schlitten **13** auf, der in vertikalen Führungen **14**, welche an den rechten Stirnseiten der Seitenwände 5a, 5b befestigt sind, in Y-Richtung verfahrbar geführt ist. In zwei horizontalen X-Führungen (nicht gezeigt) des Y-Schlittens 13 ist ein X-Schlitten **15** in X-Richtung verfahrbar geführt. In zwei horizontalen Z-Führungen **16** des X-Schlittens 15 ist wiederum ein die Werkzeugspindel 11 tragender Z-Schlitten **17** in Z-Richtung verfahrbar geführt.

Wie in Fign. 1 und 2 gezeigt, ist in einer Deckenöffnung **18** oberhalb der Werkzeugspindel 11 ein Werkzeugmagazin **19** hängend gehalten, in dem Werkzeuge 2 für die Werkzeugspindel 11 vorgehalten sind. Weiterhin ist an den anderen, in Fig. 1 linken Stirnseiten der Seitenwände 5a, 5b ein Werkstückspeicher **20** gehalten, der, wie in **Fig. 3b** gezeigt, in zwei vertikalen Führungen **21** der Seitenwände 5a, 5b höhenverfahrbar geführt sein kann.

Wie in Fign. 1 und 2 weiter gezeigt, ist an einer Deckenöffnung **22** des Deckenträgers 7 ein mindestens fünf Rotationsachsen aufweisender Greifroboter **23** hängend montiert, der zwei Gelenkarme **24** und einen Greifer **25** zum Greifen von Werkstücken 3 oder Werkzeugen 2 aufweist. Die Bearbeitungseinheit 10 und die Deckenöffnung 22 für den Greifroboter 23 sind auf einander gegenüberliegenden Seiten des Werkstücktischs 9 angeordnet, wodurch der Innenraum der Werkzeugmaschine 1 in einen Bearbeitungsraum mit der Bearbeitungseinheit 10 und in einen Bestückungsraum mit dem Greifroboter 23 aufgeteilt ist. Der Greifroboter 23 kann sowohl zu bearbeitende Werkstücke 3 aus dem Werkstückspeicher 20 entnehmen und den Werkstücktisch 9 damit beladen als auch bearbeitete Werkstücke 3 vom Werkstücktisch 9 entladen und in den Werkstückspeicher 20 zurücklegen. Außerdem kann der Greifroboter 23 ein Werkzeug 3 aus dem Werkzeugmagazin 19 entnehmen und die Werkzeugspindel 11 damit beladen als auch das Werkzeug 3 aus der Werkzeugspindel 11 entladen und in das Werkzeugmagazin 19 zurücklegen.

Üblicherweise beinhaltet der Werkstückspeicher 20 mehrere in den Maschineninnenraum ausziehbare Schubladen **26**, auf denen die zu bearbeitenden und die bearbeiteten Werkstücke 3 abgelegt sind. Während eine ausgezogene Schublade 26 für einen auf dem Maschinenbett stehenden oder außen an eine Maschinenseite angeflanschten Greifroboter ein Hindernis darstellt und der Greifroboter um die ausgezogene Schublade 26 herumschwenken muss, stellt die ausgezogene Schublade 26 für den hängenden Greifroboter 23 kein Hindernis dar, was einfachere und schnellere Roboterbewegungen ermöglicht.

Somit sind alle Maschinenkomponenten, nämlich Werkstücktisch 9, Bearbeitungseinheit 10, Werkstückspeicher 20 und Greifroboter 23, in die Monoblock-Werkzeugmaschine 1 integriert.

Unterhalb des Greifroboters 23 kann noch mindestens eine weitere Bearbeitungsstation **27** zur Nachbearbeitung von bearbeiteten Werkstücken 3, wie z.B. eine Entgratungs- oder Reinigungseinrichtung, angeordnet sein. Nach dem Entladen eines bearbeiteten Werkstücks 3 vom Werkstücktisch 9 wird das vom Greifer 25 gehaltene Werkstück 3 an der weiteren Bearbeitungsstation 27 nachbearbeitet, bevor es dann zurück in den Werkstückspeicher 20 zurückgelegt wird.

Jede der beiden Seitenwände 5a, 5b hat eine Wandöffnung **28** als gemeinsame Zugangsöffnung zur Bearbeitungseinheit 10 (Bearbeitungsseite) und zum Greifroboter 23 (Bestückungsseite). Die Lageröffnung 8 ist in einer etwa bis zur Mitte der Wandöffnung 28 hochstehenden Mittelsäule **29** der Seitenwand 5a, 5b ausgebildet.

**Fign. 4a-4c** zeigen alternative Ausgestaltungen der beiden einteiligen Seitenwände 5a, 5b.

In Fign. 4a, 4b weisen die beiden Seitenwände 5a, 5b jeweils zwei separate Wandöffnungen **28a, 28b** auf, nämlich eine Wandöffnung 28a als Zugangsöffnung zur Bearbeitungseinheit 10 (Bearbeitungsseite) und eine Wandöffnung 28b als Zugangsöffnung zum Greifroboter 23 (Bestückungsseite). Die beiden Wandöffnungen 28a, 28b sind durch eine vertikale Verbindungssäule **30** getrennt, welche die Lageröffnung 8 aufweist. In Fig. 4a hat die Verbindungssäule 30 die gleiche Wandstärke wie die übrige Seitenwand 5a, 5b, wohingegen in Fig. 4b die Verbindungssäule 30 eine geringere Wandstärke als die übrige Seitenwand 5a, 5b aufweist.

In Fig. 4c sind die beiden Seitenwände 5a, 5b jeweils als eine geschlossene Wand ohne Zugangsöffnung ausgebildet.

Anstatt gleich, wie in den Fign. 1 bis 4 gezeigt, können die beiden Seitenwände 5a, 5b auch unterschiedlich ausgebildet sein. Beispielsweise kann die vordere Seitenwand 5a eine Wandöffnung 28 oder zwei Wandöffnungen 28a, 28b aufweisen und die hintere Seitenwand 5b eine geschlossene Wand ohne Zugangsöffnung sein.

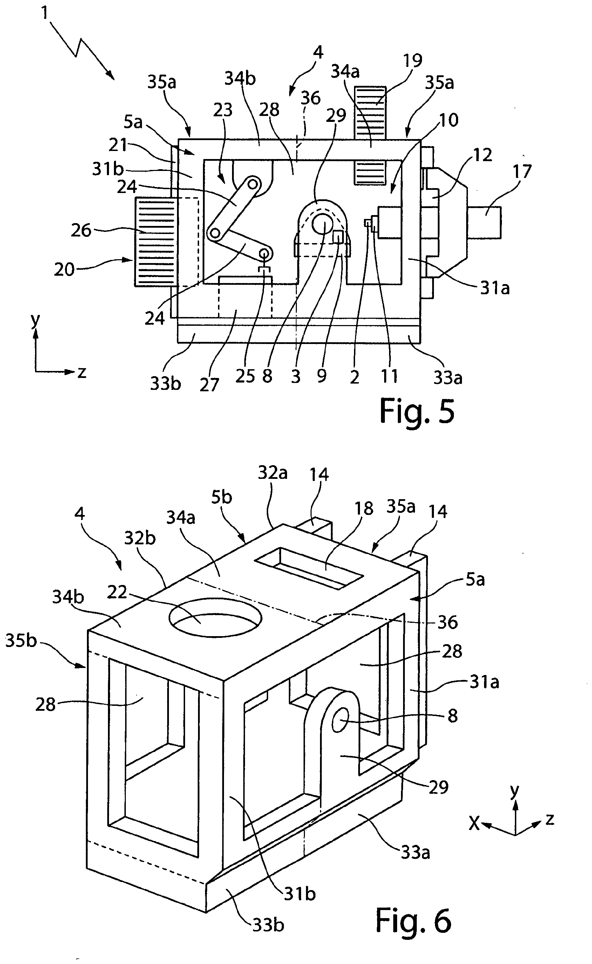

Im Unterschied zu den Fign. 1 bis 4, in denen die zwei einander gegenüberliegenden Seitenwände 5a, 5b jeweils einteilig ausgebildet sind und zusammen mit dem Bodenträger 6 und dem Deckenträger 7 das Monoblock-Rahmengestell 4 bilden, sind in den **Fign. 5 und 6** die zwei einander gegenüberliegenden Seitenwände 5a, 5b jeweils zweiteilig mit einem ersten Wandabschnitt **31a, 32a** und einem zweiten Wandabschnitt **31b, 32b** ausgebildet. Die ersten Wandabschnitte 31a, 32a der zwei Seitenwände 5a, 5b bilden zusammen mit einem ersten Bodenträger **33a** und einem ersten Deckenträger **34a** ein erstes Monoblock-Rahmengestell **35a**, und die zweiten Wandabschnitte 31b, 32b der zwei Seitenwände 5a, 5b bilden zusammen mit einem zweiten Bodenträger **33b** und einem zweiten Deckenträger **34b** ein zweites Monoblock-Rahmengestell **35b**. Das erste und das zweite Monoblock-Rahmengestell 35a, 35 sind miteinander zu dem gemeinsamen Monoblock-Rahmengestell 4 verbunden, dessen Trennfuge mit **36** bezeichnet ist und neben der Mittelsäule 29 verläuft.

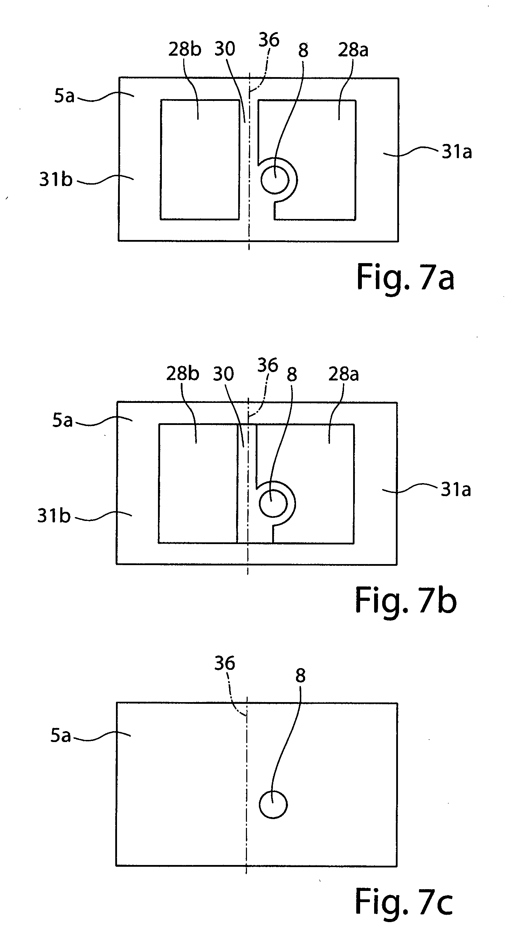

**Fign. 7a-7c** zeigen den Fign. 4a-4c entsprechende, alternative Ausgestaltungen der beiden zweiteiligen Seitenwände 5a, 5b, wobei die Trennfuge 36 in Fign. 7a und 7b durch die vertikale Verbindungssäule 30 und in Fig. 7c durch die geschlossene Wand geht.

## Patentansprüche

1. Werkzeugmaschine (1) zur insbesondere spanenden Bearbeitung von Werkstücken (3), aufweisend
zwei einander gegenüberliegende Seitenwände (5a, 5b), die unten durch einen Bodenträger (6) und oben durch einen Deckenträger (7) miteinander verbunden sind,
einen in den zwei einander gegenüberliegenden Seitenwänden (5a, 5b) drehbar gelagerten Werkstücktisch (9) für zu bearbeitende Werkstücke (3), und
eine an den zwei einander gegenüberliegenden Seitenwänden (5a, 5b) gehaltene Bearbeitungseinheit (10) mit einer insbesondere horizontaler Werkzeugspindel (11),
**gekennzeichnet durch** einen am Deckenträger (7) hängend montierten Greifroboter (23) zum Beladen des Werkstücktischs (9) mit zu bearbeitenden Werkstücken (3) und zum Entladen des Werkstücktischs (9) von bearbeiteten Werkstücken (3).

2. Werkzeugmaschine nach Anspruch 1, **dadurch gekennzeichnet, dass** die Bearbeitungseinheit (10) in vertikalen Führungen (14), welche jeweils an den Stirnseiten der zwei einander gegenüberliegenden Seitenwänden (5a, 5b) angeordnet sind, geführt ist.

3. Werkzeugmaschine nach Anspruch 1 oder 2, **dadurch gekennzeichnet, dass** die Bearbeitungseinheit (10) und der Greifroboter (23) auf einander gegenüberliegenden Seiten des Werkstücktischs (9) angeordnet sind.

4. Werkzeugmaschine nach einem der vorhergehenden Ansprüche, **dadurch gekennzeichnet, dass** auf der der Bearbeitungseinheit (10) gegenüberliegenden Maschinenseite ein Werkstückspeicher (20) angeordnet ist und dass der Greifroboter (23) zum Beladen des Werkstücktischs (9) mit zu bearbeitenden Werkstücken (3) aus dem Werkstückspeicher (20) und zum Entladen des Werkstücktischs (9) von bearbeiteten Werkstücken (3) in den Werkstückspeicher (20) dient.

5. Werkzeugmaschine nach einem der vorhergehenden Ansprüche, **dadurch gekennzeichnet, dass** am Deckenträger (7) ein Werkzeugmagazin (19) gehalten ist und dass der Greifroboter (23) zum Wechseln von Werkzeugen (2) zwischen dem Werkzeugmagazin (19) und der Bearbeitungseinheit (10) dient.

6. Werkzeugmaschine nach einem der vorhergehenden Ansprüche, **dadurch gekennzeichnet, dass** unterhalb des Greifroboters (23) mindestens eine weitere Bearbeitungsstation (27) zur Bearbeitung von Werkstücken (3) angeordnet ist und dass der Greifroboter (23) zum Be- und Entladen der weiteren Bearbeitungsstation (27) mit Werkstücken (3) dient.

7. Werkzeugmaschine nach einem der vorhergehenden Ansprüche, **dadurch gekennzeichnet, dass** mindestens eine der zwei einander gegenüberliegenden Seitenwände (5a, 5b), insbesondere jede der zwei einander gegenüberliegenden Seitenwände (5a, 5b), mindestens eine Wandöffnung (28; 28a, 28b) als Zugangsöffnung zur Bearbeitungseinheit (10) und zum Greifroboter (23) aufweist.

8. Werkzeugmaschine nach Anspruch 7, **dadurch gekennzeichnet, dass** mindestens eine der zwei einander gegenüberliegenden Seitenwände (5a, 5b), insbesondere jede der zwei einander gegenüberliegenden Seitenwände (5a, 5b), eine Wandöffnung (28a) als Zugangsöffnung zur Bearbeitungseinheit (10) und eine Wandöffnung (28b) als Zugangsöffnung zum Greifroboter (23) aufweist.

9. Werkzeugmaschine nach einem der vorhergehenden Ansprüche, **dadurch gekennzeichnet, dass** mindestens eine der zwei einander gegenüberliegenden Seitenwände (5a, 5b), insbesondere eine hintere der zwei einander gegenüberliegenden Seitenwände (5a, 5b), als geschlossene Wand ohne Zugangsöffnung ausgebildet ist.

10. Werkzeugmaschine nach einem der vorhergehenden Ansprüche, **dadurch gekennzeichnet, dass** die zwei einander gegenüberliegenden Seitenwände (5a, 5b) jeweils einteilig ausgebildet sind und zusammen mit dem Bodenträger (6) und dem Deckenträger (7) ein Monoblock-Rahmengestell (4) bilden.

11. Werkzeugmaschine nach einem der Ansprüche 1 bis 9, **dadurch gekennzeichnet, dass** die zwei einander gegenüberliegenden Seitenwände (5a, 5b) jeweils mehrteilig, insbesondere zweiteilig, ausgebildet sind.

12. Werkzeugmaschine nach Anspruch 11, **dadurch gekennzeichnet, dass** die zwei einander gegenüberliegenden Seitenwände (5a, 5b) jeweils einen ersten Wandabschnitt (31a, 32a) und einen zweiten Wandabschnitt (31b, 32b) aufweisen und dass die ersten Wandabschnitte (31a, 32a) der zwei Seitenwände (5a, 5b) ein erstes Monoblock-Rahmengestell (35a) und die zweiten Wandabschnitte (31b, 32b) der zwei Seitenwände (5a, 5b) ein zweites Monoblock-Rahmengestell (35b) bilden, die beide miteinander zu einem gemeinsamen Monoblock-Rahmengestell (4) verbunden sind.

## Claims

1. Machine tool (1) for, in particular, machining processing of workpieces (3), comprising
two opposite side walls (5a, 5b) which are connected to one another at the bottom by a bottom support (6) and at the top by a ceiling support (7),
a workpiece table (9) for workpieces (3) to be processed, which is rotatably mounted in the two opposite side walls (5a, 5b), and
a processing unit (10) which is held on the two opposite side walls (5a, 5b) and comprises an, in particular, horizontal tool spindle (11),
**characterized by** a gripping robot (23) mounted in a suspended manner on the ceiling support (7) for loading workpieces (3) to be processed onto the workpiece table (9) and for unloading processed workpieces (3) from the workpiece table (9).

2. Machine tool according to claim 1, **characterized in that** the processing unit (10) is guided in vertical guides (14) which are each arranged on the end faces of the two opposite side walls (5a, 5b).

3. Machine tool according to claim 1 or 2, **characterized in that** the processing unit (10) and the gripping robot (23) are arranged on opposite sides of the workpiece table (9).

4. Machine tool according to any one of the preceding claims, **characterized in that** on the machine side opposite the processing unit (10), a workpiece storage (20) is arranged and that the gripping robot (23) is used for loading workpieces (3) to be processed from the workpiece storage (20) onto the workpiece table (9) and for unloading processed workpieces (3) from the workpiece table (9) into the workpiece storage (20).

5. Machine tool according to any one of the preceding claims, **characterized in that** a tool magazine (19) is held on the ceiling support (7) and that the gripping robot (23) is used to change tools (2) between the workpiece magazine (19) and the processing unit (10).

6. Machine tool according to any one of the preceding claims, **characterized in that** below the gripping robot (23) at least one further processing station (27) is arranged for processing workpieces (3) and that the gripping robot (23) is used for loading and unloading workpieces (3) at the further processing station (27).

7. Machine tool according to any one of the preceding claims, **characterized in that** at least one of the two opposite side walls (5a, 5b), in particular each of the two opposite side walls (5a, 5b), comprises at least one wall opening (28; 28a, 28b) as access opening to the processing unit (10) and to the gripping robot (23).

8. Machine tool according to claim 7, **characterized in that** at least one of the two opposite side walls (5a, 5b), in particular each of the two opposite side walls (5a, 5b), comprises a wall opening (28a) as access opening to the processing unit (10) and a wall opening (28b) as access opening to the gripping robot (23).

9. Machine tool according to any one of the preceding claims, **characterized in that** at least one of the two opposite side walls (5a, 5b), in particular a rear wall of the two opposite side walls (5a, 5b), is designed as a closed wall without access opening.

10. Machine tool according to any one of the preceding claims, **characterized in that** the two opposite side walls (5a, 5b) are each formed in one part and form, together with the bottom support (6) and the ceiling support (7), a monoblock frame (4).

11. Machine tool according to any one of the claims 1 to 9, **characterized in that** the two opposite side walls (5a, 5b) are each formed in several parts, in particular in two parts.

12. Machine tool according to claim 11, **characterized in that** the two opposite side walls (5a, 5b) each comprise a first wall section (31a, 32a) and a second wall section (31b, 32b) and that the first wall sections (31a, 32a) of the two side walls (5a, 5b) form a first monoblock frame (35a) and the second wall sections (31b, 32b) of the two side walls (5a, 5b) form a second monoblock frame (35b) which are both connected to one another to form a common monoblock frame (4).

## Revendications

1. Machine-outil (1) destinée à l'usinage de pièces (3), notamment par enlèvement de copeaux, comprenant
deux parois latérales (5a, 5b) mutuellement opposées, reliées l'une à l'autre en partie basse par l'intermédiaire d'un support de plancher (6) et, en partie haute, par l'intermédiaire d'un support de plafond (7),
un plateau (9) porte-pièces, monté tournant dans les deux parois latérales (5a, 5b) mutuellement opposées, et dédié à des pièces (3) devant être usinées,
et
une unité d'usinage (10) retenue sur les deux parois latérales (5a, 5b) mutuellement opposées, et munie d'une broche (11) porte-outils notamment horizontale,
**caractérisée par** un robot de préhension (23) monté en suspension sur le support de plafond (7), conçu pour charger le plateau (9) porte-pièces en pièces (3) à usiner, et pour décharger des pièces usinées (3) dudit plateau (9) porte-pièces.

2. Machine-outil selon la revendication 1, **caractérisée par le fait que** l'unité d'usinage (10) est guidée dans des guides verticaux (14) respectifs, placés aux faces extrêmes des deux parois latérales (5a, 5b) mutuellement opposées.

3. Machine-outil selon la revendication 1 ou 2, **caractérisée par le fait que** l'unité d'usinage (10) et le robot de préhension (23) sont implantés sur des côtés mutuellement opposés du plateau (9) porte-pièces.

4. Machine-outil selon l'une des revendications précédentes, **caractérisée par le fait qu'**un accumulateur (20) de pièces est installé du côté de ladite machine qui est situé à l'opposé de l'unité d'usinage (10) ; et **par le fait que** le robot de préhension (23) sert à charger le plateau (9) porte-pièces en pièces (3) à usiner, à partir de l'accumulateur (20) de pièces, et à décharger, dans ledit accumulateur (20) de pièces, des pièces usinées (3) provenant dudit plateau (9) porte-pièces.

5. Machine-outil selon l'une des revendications précédentes, **caractérisée par le fait qu'**un magasin (19) à outils est retenu sur le support de plafond (7) ; et **par le fait que** le robot de préhension (23) sert au remplacement d'outils (2) entre ledit magasin (19) à outils et l'unité d'usinage (10).

6. Machine-outil selon l'une des revendications précédentes, **caractérisée par le fait qu'**au moins un poste d'usinage (27) supplémentaire, dévolu à l'usinage de pièces (3), est disposé au-dessous du robot de préhension (23) ; et **par le fait que** ledit robot de préhension (23) sert à charger des pièces (3) dans ledit poste d'usinage (27) supplémentaire, et à les en décharger.

7. Machine-outil selon l'une des revendications précédentes, **caractérisée par le fait qu'**au moins l'une des deux parois latérales (5a, 5b) mutuellement opposées, en particulier chacune des deux parois latérales (5a, 5b) mutuellement opposées, comporte au moins une ouverture (28 ; 28a, 28b) pratiquée dans la paroi, en tant qu'ouverture d'accès à l'unité d'usinage (10) et au robot de préhension (23).

8. Machine-outil selon la revendication 7, **caractérisée par le fait qu'**au moins l'une des deux parois latérales (5a, 5b) mutuellement opposées, en particulier chacune des deux parois latérales (5a, 5b) mutuellement opposées, comprend une ouverture (28a) pratiquée dans la paroi en tant qu'ouverture d'accès à l'unité d'usinage (10), et une ouverture (28b) pratiquée dans la paroi en tant qu'ouverture d'accès au robot de préhension (23).

9. Machine-outil selon l'une des revendications précédentes, **caractérisée par le fait qu'**au moins l'une des deux parois latérales (5a, 5b) mutuellement opposées, en particulier une paroi postérieure parmi les deux parois latérales (5a, 5b) mutuellement opposées, est réalisée en tant que paroi close dépourvue d'ouverture d'accès.

10. Machine-outil selon l'une des revendications précédentes, **caractérisée par le fait que** les deux parois latérales (5a, 5b), mutuellement opposées, sont respectivement réalisées d'un seul tenant, et forment un bâti d'encadrement monobloc (4) en association avec le support de plancher (6) et avec le support de plafond (7).

11. Machine-outil selon l'une des revendications 1 à 9, **caractérisée par le fait que** les deux parois latérales (5a, 5b), mutuellement opposées, sont respectivement réalisées en plusieurs parties et notamment en deux parties.

12. Machine-outil selon la revendication 11, **caractérisée par le fait que** les deux parois latérales (5a, 5b), mutuellement opposées, comprennent à chaque fois une première zone de paroi (31a, 32a) et une seconde zone de paroi (31b, 32b) ; et **par le fait que** les premières zones de paroi (31a, 32a) des deux parois latérales (5a, 5b) forment un premier bâti d'encadrement monobloc (35a), et les secondes zones de paroi (31b, 32b) des deux parois latérales (5a, 5b) forment un second bâti d'encadrement monobloc (35b), qui sont reliés l'un à l'autre pour constituer un bâti d'encadrement monobloc (4) commun.
